# EUROPÄISCHE PATENTSCHRIFT

(11) **EP 1 299 645 B1**
(45) Veröffentlichungstag und Bekanntmachung des Hinweises auf die Patenterteilung: **13.01.2010**
(21) Anmeldenummer: 01967620.4
(22) Anmeldetag: 11.07.2001
(51) Int. Cl.: F04B 13/00

(54) **VERFAHREN ZUM ANSTEUERN EINES ELEKTROMOTORS EINER DOSIERPUMPE**
METHOD FOR CONTROLLING THE ELECTRIC MOTOR OF A METERING PUMP
PROCEDE POUR COMMANDER LE MOTEUR ELECTRIQUE D'UNE POMPE DE DOSAGE

(30) Priorität: 12.07.2000 DE 10033994
(43) Veröffentlichungstag der Anmeldung: 09.04.2003
(73) Patentinhaber: GRUNDFOS A/S, 8850 Bjerringbro (DK)
(72) Erfinder: SOLGAARD, Kurt, DK-2830 Virum (DK); KRAGELUND, Bo, DK-8660 Skanderborg (DK)
(74) Vertreter: Vollmann, Heiko
(86) Internationale Anmeldenummer: PCT/IB2001/001767
(87) Internationale Veröffentlichungsnummer: WO 2002/004811

(56) Entgegenhaltungen:
- DE-A- 19 623 537
- US-A- 4 326 837
- US-A- 4 624 625

## Beschreibung

Die Erfindung betrifft ein Verfahren zum Ansteuern eines Elektromotors einer Dosierpumpe gemäß den im Oberbegriff des Anspruches 1 angegebenen Merkmalen. Ein solches Verfahren ist z.B. aus der DE-A-196 23 537 bekannt.

Nach dem Verdrängerprinzip arbeitende Dosierpumpen, also solche mit Membran-oder Kolbenpumpe, werden entwederelektromagnetisch oder mittels eines Motors angetrieben. Bei den elektromagnetisch angetriebenen Dosierpumpen kann die Fördermenge üblicherweise durch mechanische Hubverstellung einerseits und durch Frequenzänderung andererseits eingestellt werden. Um ein möglichst genaues Dosieren (Zumischen) des Fluids in einen veränderbaren Förderstrom (Hauptförderstrom) zu erzielen, weisen solche Pumpen üblicherweise einen elektrischen Anschluss auf, an den ein Taktgeber anschließbar ist, der immer dann, wenn eine bestimmte Fördermenge des Hauptförderstromes gefördert worden ist, einen Impuls abgibt, wonach die Dosierpumpe einen oder mehrere Arbeitshübe durchführt, deren Förderhub mechanisch an die pro Impuls abzugebende Dosiermenge angepasst ist. Je nach Hubeinstellung und der zu dosierenden Fluidmenge kann es trotz dieser volumenmäßigen Abstimmung der zu mischenden Förderströme zu ungleichmäßigen Mischungsverhältnissen kommen, wenn nämlich das zu dosierende Fluid beispielsweise in kurzer Zeit unmittelbar nach dem erhaltenen Impuls in den Hauptförderstrom gefördert wird und der nächste Impuls erst nach einem langen Zeitraum erfolgt.

Neben den konstruktiv recht einfach aufgebauten Dosierpumpen mit elektromagnetischem Antrieb sind auch solche mit elektromotorischem Antrieb bekannt, beispielsweise aus DE 196 23 537 A1. Derartige Dosierpumpen sind konstruktiv wesentlich aufwendiger, ermöglichen jedoch eine genauere und gleichmäßigere Fördermengensteuerung. Sie arbeiten üblicherweise ohne Hubverstellung. Eine Dosierpumpe dieser Bauart ist beispielsweise durch den Typ LEWA LAB K3/K5 der LEWA Herbert Ott GmbH & Co. in Leonberg bekannt. Diese Pumpe weist zwar eine Schnittstelle zur externen Dosierstromsteuerung auf, doch erfolgt dort die Ansteuerung über ein Analogsignal, das aufwendig in der Signalaufbereitung und Weiterverarbeitung sowie störanfällig ist. Die Dosierfördermenge wird dort in Abhängigkeit eines elektrischen Stromes gesteuert.

Vor diesem Stand der Technik liegt der vorliegenden Erfindung die Aufgabe zugrunde, eine elektromotorisch angetriebene Dosierpumpe so auszugestalten, dass sie bei externer Impulsansteuerung nach einem vorgegebenen Verlauf möglichst genau fördert.

Diese Aufgabe wird gemäß der Erfindung durch die in Anspruch 1 angegebenen Merkmale gelöst. Vorteilhafte Ausgestaltungen des erfindungsgemäßen Verfahrens sind in den Unteransprüchen sowie der nachfolgenden Beschreibung angegeben.

Grundgedanke der vorliegenden Erfindung ist es, die zu fördernde Menge nach einem vorgegebenen Verlauf auf das zwischen zwei oder mehr Impulsen gebildete Zeitintervall zu verteilen, und zwar derart, dass nach Möglichkeit immer eine gewisse Fördermenge vorhanden ist. Zweckmäßigerweise wird dabei derzeitliche Abstand von zwei aufeinanderfolgenden Impulsen ermittelt und dann der Antrieb des Elektromotors, beispielsweise ein Schrittmotor oder ein mit entsprechender Sensorik zur Positionserfassung ausgerüsteter Gleich- oder Wechselstrommotor so angesteuert, dass z. B. eine möglichst gleichmäßige Verteilung derzu fördernden Fluidmenge im darauf folgenden Impulsintervall oder in einer nachfolgenden Impulsintervallfolge erfolgt. Unter möglichst gleichmäßig im Sinne der Erfindung ist zu verstehen, dass beispielsweise bei schrittweisem Betrieb die Schritte mit gleichem zeitlichen Abstand über das Impulsintervall verteilt werden. Es versteht sich, dass eine völlig gleichmäßige Verteilung möglicherweise durch einen oder mehrere erforderliche Rückhübe der Pumpe gestört werden können, auch wenn, was bereits zum Stand der Technik zählt, der Motor während des Rückhubs mit höherer Geschwindigkeit angesteuert wird als während des Förderhubs.

Wenn die zeitlichen Abstände zwischen aufeinanderfolgenden Impulsen kürzer werden, könnte dies dazu führen, dass die geförderte und dosierte Fluidmenge kleiner ist als die tatsächlich gewünschte. Um dies zu vermeiden, sieht die Erfindung vor, die sich nach dem Ansteuern von zwei oder mehr aufeinanderfolgenden Impulsintervallen ergebende Fehlmenge zu ermitteln und in einem späteren, vorzugsweise im nachfolgenden Impulsintervall zu korrigieren. Eine solche Korrektur kann in vergleichsweise aufwendiger Weise durch Ermittlung des tatsächlichen Dosierförderstroms durch externe Sensorik erfolgen, wird jedoch vorteilhaft unter Zugrundelegung des sich aufgrund der Ansteuerung ergebenden theoretischen Dosierförderstroms ermittelt, da dann keine externe Sensorik erforderlich ist und dies anhand der intern ohnehin vorhandenen elektrischen Werte ermittelt werden kann. Da elektromotorisch angetriebene Dosierpumpen konstruktionsbedingt im Vergleich zu den eingangs beschriebenen elektromagnetisch angetriebenen genau arbeiten, kann auf eine externe Sensorik in der Regel verzichtet werden, ohne gravierende Nachteile in Kauf nehmen zu müssen.

Ein besonderer Vorteil der erfindungsgemäßen Impulssteuerung ist es, auf die bei Membranpumpen bekannte Hubverstellung des Pumpenkörpers verzichten zu können, da diese zu Ungenauigkeiten führt und einen mechanischen Eingriff erfordert, der die Fernsteuerung der Pumpe erschwert.

Insbesondere beim Zumischen eines Fluids in einen sich ändernden Hauptförderstrom ist es erstrebenswert, es nach Möglichkeit gar nicht zu Korrekturen kommen zu lassen, sondern den Dosierförderstrom möglichst schnell an den sich ändernden Hauptförderstrom anzupassen. Dies kann dadurch erfolgen, dass bei der Verteilung der zu fördernden Fluidmenge nicht nur der Abstand zweier oder ggf. mehrerer vorangegangener Impulse berücksichtigt und auf ein sich daraus theoretisch ergebendes folgendes Impulsintervall verteilt wird, sondern dass hierbei auch die Änderung der Impulsabstände ermittelt und bei der Berechnung der Verteilung berücksichtigt wird, d. h. ein gewisser Regelalgorithmus erfolgt, der ein möglichst frühzeitiges Anpassen an sich ändernde Zustände bezweckt.

Insbesondere bei Dosiervorgängen, bei denen es zwar einerseits auf eine möglichst gleichmäßige Zufuhr zu einem Hauptförderstrom ankommt und andererseits auch auf die insgesamt zugegebene Menge, d. h. eine einzustellende Konzentration, wie dies beispielsweise beim Zumischen von Chlor in Schwimmbadwasser erforderlich ist, ist es nicht nur erforderlich, auf ein gleichmäßiges Mischungsverhältnis zu achten, sondern auch die Addition von Fehlern auszuschließen, die sich möglicherweise durch Regelungenauigkeiten oder sonstige Fehlerquellen ergeben können. Hierzu sieht das erfindungsgemäße Verfahren vor, die Anzahl der Impulse, d. h. die sich daraus ergebende Sollfördermenge oder einen entsprechenden Kennwert zu erfassen und diesen mit der sich aufgrund der Ansteuerung des Elektromotors zumindest theoretisch ergebenden Dosierfördermenge oder einem entsprechenden Kennwert zu vergleichen und bei Differenzen diese nachfolgend entsprechend auszugleichen. Eine solche Langzeitregelung kann beispielsweise die Impulse über Stunden oder Tage erfassen, um einmal stündlich oder einmal täglich ggf. eine ergänzende Korrektur durchzuführen, welche durch die schnelle Regelung, welche den Förderstrom der Dosierpumpe an den sich ändernden Hauptförderstrom anpasst, nicht erfüllt werden kann.

Ungeachtet dieser Langzeitregelung ist es grundsätzlich erstrebenswert, die Korrektur der erfassten Fehlmenge unmittelbar nach der Erfassung durchzuführen, um eine möglichst schnelle Regelung zu gewährleisten. Dies ist insbesondere dann erstrebenswert, wenn die Dosierpumpe zur kontinuierlichen Zumischung eingesetzt wird, bei der unmittelbar nach dem Zumischen ein Abfüllen oder Verpacken erfolgt, so dass spätere Korrekturen auf das bereits abgefüllte bzw. verpackte Produkt keinen Einfluss mehr haben können.

Um sicherzustellen, dass auch zu Anfang des Dosiervorgangs schon eine gleichmäßige Dosierung über das gesamte Impulsintervall erfolgt, ist es zweckmäßig, die Ansteuerung des Pumpenmotors erst nach Empfang von zwei Impulsen einzuleiten. Die dadurch verfahrensbedingte Fehlmenge kann durch die vorbeschriebene übergeordnete Korrekturregelung ausgeglichen werden.

Die Erfindung ist nachfolgend anhand eines Ausführungsbeispiels näher erläutert. Es zeigen:
- Fig. 1: die Abhängigkeit der Pulsfolge zur Fördermenge eines ersten Ausführungsbeispiels und
- Fig. 2: ein zweites Ausführungsbeispiel in Darstellung nach Fig. 1.

In den Darstellungen ist auf der oberen Zeitachse eine Folge elektrischer Impulse t₁ bis t₇ dargestellt, wie sie beispielhaft von einem Impulsgeber abgegeben werden, wobei jeder Impuls t₁ bis t₇ für ein bestimmtes Volumen eines Hauptförderstroms steht, dem durch die Dosierpumpe eine entsprechende Menge eines Dosierförderstromes zuzumischen ist. Auf der unteren Zeitachse ist jeweils der von der Dosierpumpe in Abhängigkeit der externen Impulse gesteuerte Dosierförderstrom dargestellt.

Um eine möglichst gleichmäßige Dosierung des Dosierförderstroms in den Hauptförderstrom zu erreichen, wird der Dosierförderstrom mittels der Steuerung der Dosierpumpe so eingestellt, dass die in den Hauptförderstrom zu mischende Dosierfördermenge möglichst gleichmäßig über das gesamte zwischen zwei aufeinanderfolgenden Impulsen gebildete Intervall Δt verteilt wird. Um den zeitlichen Abstand Δt zunächst einmal zu erfassen, ist es erforderlich, dass vor Beginn des Dosiervorgangs zwei elektrische Impulse t₁ und t₂ abgewartet werden und die dazwischen liegende Zeit Δt₁₂ ermittelt wird. Es wird nun entsprechend der pro Impuls zuzumischenden Dosierfördermenge die Pumpe so angesteuert, dass das pro Impuls zu fördernde Volumen Vₛₒₗₗ auf eine Zeit beginnend mit t₂ verteilt wird, die Δt₁₂ entspricht, so dass sich unter Zugrundelegung dieses Zeitintervalls Δt₁₂ ein Förderstrom Q₂₃ ergibt, der nach einer Förderzeit von Δt₁₂ das voreingestellte Volumen Vₛₒₗₗ erreicht hat. Da im vorliegenden Ausführungsbeispiel der Abstand der Impulse t₁ bis t₄ zunimmt, entsteht bei dieser Steuerung bei zunehmendem Impulsabstand bis t₄ für kurze Zeit jeweils ein Förderstillstand, wenn nämlich das Volumen Vₛₒₗₗ bereits erreicht ist, der nachfolgende Impuls jedoch noch nicht empfangen worden ist.

Wenn die Steuerung den Impuls †₃ erhält, ermittelt sie den zeitlichen Abstand Δt₂₃ zum Impuls t₂ und verteilt die zu fördernde Menge Vₛₒₗₗ nun auf dieses Zeitintervall Δt₂₃, senkt den Förderstrom Q₃₄ also entsprechend. Der Dosierförderstrom Q₃₄ ergibt sich, indem man das Sollfördervolumen Vₛₒₗₗ durch das letztermittelte Zeitintervall Δt₂₃ dividiert.

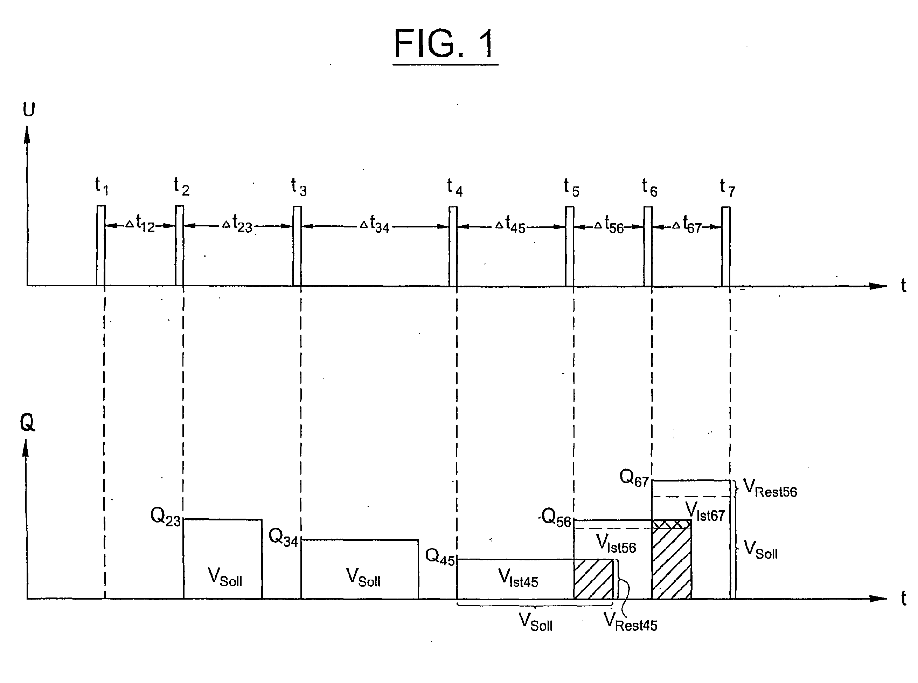

Wenn die Abstände der Impulse nicht größer, sondern kleiner werden, wie dies anhand der Impulse t₄ bis t₆ dargestellt ist, ergibt sich das Problem, dass ein neuer Impuls, beispielsweise tₛ empfangen wird, wenn die Zeitspanne, für die der Förderstrom Q₄,₅ berechnet worden ist, um das Volumen Vₛₒₗₗ zu erreichen, noch nicht abgelaufen ist. Bei der Steuerung gemäß dem ersten Ausführungsbeispiel (Fig. 1) wird die Pumpe so angesteuert, dass mit Empfang eines neuen Impulses (hier erstmals t₅) die bisherige Förderung gestoppt wird und für das nun neu beginnende Förderintervall Δt₅₆ ein Förderstrom Q₅₆ festgelegt wird, der so berechnet ist, dass er innerhalb eines Zeitraums von Δt₄₅ ein Volumen Vₛₒₗₗ zuzüglich eines Volumens V_{Rest} ergibt. Das Volumen V_{Rest} ergibt sich aus dem Volumen Vₛₒₗₗ abzüglich des im vorangegangenen Intervall tatsächlich geförderten Volumens Vᵢₛₜ. Für das Förderintervall Δt₄₅ ergibt sich somit ein Volumen V_{Rest}, das dem Förderstrom Q₄₅ multipliziert mit der Differenz von Δt₃₄ und Δt₄₅ ergibt. Dieses im Zeitintervall Δt₄₅ zu wenig geförderte Volumen wird also bei der Berechnung des Förderstroms Q₅₆ zu Vₛₒₗₗ addiert.

Da die Zeitspanne Δt₅₆ wiederum kleiner als die vorangegangene Δt₄₅ ist, wird der Förderstrom Q₅₆ nach Empfang des Impulses t₆ abgebrochen und sodann ein Dosierförderstrom Q₆₇ erzeugt, bei dem unter Zugrundelegung eines Förderintervalls in der Größenordnung von Δt₅₆ der Förderstrom so berechnet worden ist, dass das Volumen Vₛₒₗₗ zuzüglich des im Förderintervall Δt₅₆ noch nicht geförderten Volumens V_{Rest56} beträgt. Das noch nicht geförderte Volumen V_{Rest56} setzt sich dabei zum einen aus dem noch nicht in diesem Intervall geförderten Anteil am Volumen Vₛₒₗₗ und zum anderen dem noch nicht geförderten Anteil des Volumens V_{Rest45} des wiederum vorangegangenen Intervalls zusammen, das durch Kreuzschraffur kenntlich gemacht ist, während das übrige Restvolumen einfach schraffiert ist.

Der vorstehend beschriebene Regelalgorithmus verdeutlicht, dass auch bei sich ändernden Abständen der Impulse recht schnell und exakt durch die Steuerung reagiert wird. In der Praxis sind die Schwankungen der Impulsabstände recht gering, so dass die anhand von Fig. 1 dargestellte vergleichsweise aufwendige Steuerung häufig gar nicht erforderlich sein wird oderzumindest durch eine zusätzliche übergreifende Korrektur ausgeglichen werden kann. Eine solche übergreifende Korrektur kann nach einer vorgegebenen Zeit oder nach einer vorgegebenen Impulszahl folgen, wobei das innerhalb dieser Zeit entsprechend der Impulszahl zu fördernde Soll-Volumen ermittelt und mit dem aufgrund der Steuerung sich ergebenden Ist-Volumen verglichen und im nachfolgenden Intervall oder in den nachfolgenden Intervallen ggf. korrigiert wird. Über diese langfristige Korrektur können Steuerungsfehler oder auch Regelabweichungen erfasst werden, die vorgesehen sein können, um den Förderstrom möglichst vorgreifend an sich ändernde Impulsabstände anzugleichen. Auch können sich in der Praxis Steuerungsfehler, sei es durch Rückhübe oder sonstige Fehlhübe ergeben, die sonst nur schwer oder nicht erfassbar sind.

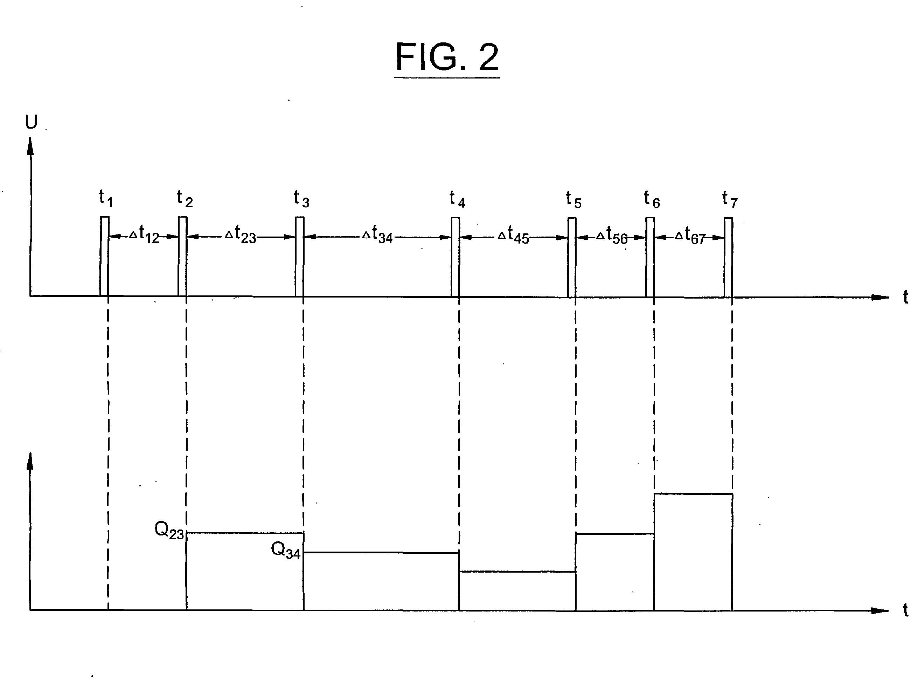

In der Vielzahl der Fälle wird jedoch eine vereinfachte Steuerung gemäß dem Ausführungsbeispiel nach Fig. 2 ausreichen, bei der der Förderstrom entsprechend dervorbeschriebenen Ausführungsvariante berechnet wird, in dem zunächst zwei Impulse t₁ und t₂ abgewartet werden, der dazwischen gebildete Zeitraum Δt₁₂ ermittelt und das pro Impuls zu fördernde Soll-Volumen Vₛₒₗₗ auf diesen Zeitraum Δt₁₂ verteilt wird, so dass sich ein Förderstrom Q₂₃ ergibt. Im Unterschied zu der vorbeschriebenen Aüsführungsvariante wird jedoch nach Erreichen des Fördervolumens Vₛₒₗₗ nicht der Fördervorgang unterbrochen, sondern bis zum Empfang des nächsten Impulses t₃ weitergefördert, um eine kontinuierliche Zumischung sicherzustellen. Die beim Empfang des Impulses t₃ angesteuerte Fördermenge Q₃₄ ergibt sich aus dem pro Impuls zu fördernden Volumen Vₛₒₗₗ und der Zeit Δt₂₃. Auch hier erfolgt die Förderung bis zum Empfang des nächsten Impulses t₄.

Wie sich hieraus ergibt, wird steuerungsbedingt bei dieser Ausführungsvariante bei abnehmender Impulsfolge zu viel gefördert, während bei zunehmender Impulsfolge zu wenig gefördert wird, da jeweils erst mit Empfang des nächsten Impulses die voreingestellte Fördermenge korrigiert wird. Da der Hauptförderstrom in der Praxis vergleichsweise konstant ist und die Abweichungen nach oben und unten gleichermaßen schwanken, kann mit dieser vereinfachten Steuerung eine vergleichsweise genaue Dosierung erreicht werden mit dem Vorteil, dass ständig, also lückenlos zugemischt wird. Auch hier kann eine übergeordnete Steuerung vorgesehen sein, welche beispielsweise nach Stunden oder Tagen die empfangenen Impulse zählt, daraus das Soll-Volumen des gesamten Dosierförderstroms ermittelt und mit dem tatsächlich gemäß der Steuerung geförderten Dosierförderstrom vergleicht und ggf. korrigiert. Die übergeordnete Korrektur kann vorteilhafterweise nach wenigen Impulsen oder nach Durchführung eines oder mehrerer Pumpenhübe durchgeführt werden. Zudem weist die Steuerung die üblichen Sicherheitsschaltungen auf, die beispielsweise dafür sorgen, dass bei überdurchschnittlich starken Abweichungen im Hauptförderstrom der Dosierförderstrom angepasst wird, z. B. gestoppt wird, wenn nach einer vorbestimmten Zeit kein weiterer Impuls empfangen wird.

## Patentansprüche

1. Verfahren zum Ansteuern eines Elektromotors einer Dosierpumpe, bei dem die zu fördernde Fluidmenge durch einen externen Impulsgeber vorgegeben wird, wobei jedem Impuls eine vorbestimmte Fördermenge zugeordnet ist, **dadurch gekennzeichnet, dass** der zeitliche Abstand von mindestens zwei Impulsen erfasst und der Elektromotorso angesteuert wird, dass die zu fördernde vorbestimmte Fluidmenge unter Zugrundelegung des vorermittelten zeitlichen Abstands nach einem vorgegebenen Verlauf auf ein nachfolgendes Impulsintervall verteilt wird.

2. Verfahren nach Anspruch 1, **dadurch gekennzeichnet, dass** der zeitliche Abstand der mindestens zwei letzten Impulse erfasst wird und dass die zu fördernde Fluidmenge unter Zugrundelegung des vorermittelten Abstands möglichst gleichmäßig auf das darauf folgende Impulsintervall verteilt wird.

3. Verfahren nach einem der vorhergehenden Ansprüche, **dadurch gekennzeichnet, dass** die sich nach dem Ansteuern von zwei oder mehr aufeinanderfolgenden Impulsintervallen ergebende Fehlmenge ermittelt und korrigiert wird.

4. Verfahren nach einem der vorhergehenden Ansprüche, **dadurch gekennzeichnet, dass** die sich nach dem Ansteuern von zwei aufeinanderfolgenden Impulsintervallen ergebende Fehlmenge ermittelt und im nachfolgenden Impulsintervall korrigiert wird.

5. Verfahren nach einem der vorhergehenden Ansprüche, **dadurch gekennzeichnet, dass** die zeitliche Änderung des Impulsabstands erfasst und bei der Verteilung der zu fördernden Fluidmenge auf ein oder mehrere darauf folgende Impulsintervalle auch in Abhängigkeit dieser Änderung erfolgt.

6. Verfahren nach einem der vorhergehenden Ansprüche, **dadurch gekennzeichnet, dass** die Anzahl der Impulse bzw. die zu fördernde Fluidmenge sowie die sich aufgrund der Ansteuerung theoretisch ergebende Fördermenge oder entsprechende Kennwerte summiert und gespeichert werden, und dass nach einer vorbestimmten Zeit die summierten und gespeicherten Werte der Fördermenge mit der zu fördernden Fluidmenge verglichen werden und ggf. eine Korrektur der Fördermenge erfolgt.

7. Verfahren nach einem der vorhergehenden Ansprüche, **dadurch gekennzeichnet, dass** die Ansteuerung der Pumpenmotors erst nach Empfang von zwei Impulsen fördernd angesteuert wird.

8. Verfahren nach einem der vorhergehenden Ansprüche, **dadurch gekennzeichnet, dass** der Korrekturvorgang unmittelbar nach der Erfassung, vorzugsweise in dem sich auf das Erfassungsintervall anschließende Impulsintervall erfolgt.

## Claims

1. A method for activating an electric motor of a metering pump, with which the fluid quantity to be delivered is set by way of an external impulse generator, wherein a predetermined delivery quantity is allocated to each impulse, **characterised in that** the temporal interval of at least two impulses is detected and the electrical motor is activated such that the predefined fluid quantity to be delivered, taking the previously evaluated temporal interval as a basis, is distributed over a subsequent impulse interval according to a predefined course.

2. A method according to claim 1, **characterised in that** the temporal interval of the at least two last impulses is detected and that the fluid quantity to be delivered, taking the previously evaluated interval as a basis, is distributed as uniformly as possible over the impulse interval following this.

3. A method according to one of the preceding claims, **characterised in that** the missed quantity resulting after the activation of two or more successive impulse intervals is determined and corrected.

4. A method according to one of the preceding claims, **characterised in that** the missed quantity resulting after the activation of two or more successive impulse intervals is determined and corrected in the subsequent impulse interval.

5. A method according to one of the preceding claims, **characterised in that** the temporal change of the impulse interval is detected, and the distribution of the fluid quantity to be delivered over one or more impulse intervals following this is also effected in dependency on this change.

6. A method according to one of the preceding claims, **characterised in that** the number of impulses or the fluid quantity to be delivered as well a delivery quantity resulting theoretically on account of the activation or corresponding characteristic values are summed and stored, and that after a predetermined time, the summed and stored values of the delivery quantity are compared to the fluid quantity to be delivered and where appropriate a correction of the delivery quantity is carried out.

7. A method according to one of the preceding claims, **characterised in that** the pump motor is not activated in delivery until the receipt of two impulses.

8. A method according to one of the preceding claims, **characterised in that** the correction procedure is effected directly after the detection, preferably in the impulse interval subsequent to the detection interval.

## Revendications

1. Procédé pour commander le moteur électrique d'une pompe de dosage, dans lequel la quantité de fluide à transporter est prédéterminée par un générateur d'impulsions externe, un débit prédéterminé étant associé à chaque impulsion, **caractérisé en ce que** l'intervalle de temps entre au moins deux impulsions est détecté et **en ce que** le moteur électrique est commandé de façon telle que la quantité de fluide prédéterminée à transporter est répartie, sur la base de l'intervalle de temps précédemment déterminé, sur un intervalle d'impulsions subséquent, selon une courbe prédéterminée.

2. Procédé selon la revendication 1, **caractérisé en ce que** l'intervalle de temps entre les deux dernières impulsions au moins est détecté et **en ce que** la quantité de fluide à transporter est répartie le plus uniformément possible sur l'intervalle d'impulsions suivant, sur la base de l'intervalle précédemment déterminé.

3. Procédé selon l'une des revendications précédentes, **caractérisé en ce que** la quantité erronée résultant après la commande de deux intervalles d'impulsions successifs ou plus est déterminée et corrigée.

4. Procédé selon l'une des revendications précédentes, **caractérisé en ce que** la quantité erronée résultant après la commande de deux intervalles d'impulsions successifs est déterminée et corrigée dans l'intervalle d'impulsions suivant.

5. Procédé selon l'une des revendications précédentes, **caractérisé en ce que** la variation temporelle de l'intervalle d'impulsions est détectée et **en ce que** la répartition de la quantité de fluide à transporter sur un ou plusieurs intervalles d'impulsions qui suivent s'effectue également en fonction de cette variation.

6. Procédé selon l'une des revendications précédentes, **caractérisé en ce que** le nombre des impulsions ou la quantité de fluide à transporter ainsi que le débit résultant théoriquement de la commande ou les valeurs caractéristiques correspondantes sont totalisés et mémorisés, et **en ce que**, après un temps prédéterminé, les valeurs totalisées et mémorisées du débit sont comparées à la quantité de fluide à transporter et que s'effectue le cas échéant une correction du débit.

7. Procédé selon l'une des revendications précédentes, **caractérisé en ce que** la commande du moteur de pompe n'est initiée pour transport du fluide qu'après réception de deux impulsions.

8. Procédé selon l'une des revendications précédentes, **caractérisé en ce que** l'opération de correction a lieu immédiatement après la détection, de préférence dans l'intervalle d'impulsions qui suit l'intervalle de détection.
